# Europäisches Patentamt

# European Patent Office

# Office européen des brevets

(19)

(11) Veröffentlichungsnummer: **0 036 518**
**A1**

(12) ## EUROPÄISCHE PATENTANMELDUNG

(21) Anmeldenummer: **81101532.0**

(51) Int. Cl.³: **B 62 M 9/16**

(22) Anmeldetag: **04.03.81**

(30) Priorität: **26.03.80 DE 3011582**

(43) Veröffentlichungstag der Anmeldung: **30.09.81**
**Patentblatt 81/39**

(84) Benannte Vertragsstaaten: **AT BE CH FR GB IT LI NL SE**

(71) Anmelder: **Hunfeld, Hermann, Berssener Strasse 25,**
**D-4475 Sögel (DE)**

(72) Erfinder: **Hunfeld, Hermann, Berssener Strasse 25,**
**D-4475 Sögel (DE)**

(74) Vertreter: **Jabbusch, Wolfgang, Dr., Elisabethstrasse 6,**
**D-2900 Oldenburg (DE)**

(54) **Vorrichtung zum Justieren der Achsen endlos umlaufender Ketten, Gurte, Bänder, Riemen oder dergleichen.**

(57) Vorrichtung zum Justieren der Achsen endlos umlaufender Ketten, Gurte, Bänder, Riemen oder dergleichen, insbesondere Fahrradketten durch die Hinterradachse, die zwecks Spannen vermittels einer Veränderung des Achsabstands lösbar beziehungsweise verstellbar in feststehenden Führungen gehalten sind.

Erfindungsgemäß sind auf die Achsenden (9) Plattensegmente (1) steckbar, die im wesentlichen rechteckförmig ausgebildet sind und an den Längsseiten vorzugsweise als Verzahnung (2) ausgebildete Formschlußelemente haben, die bei befestigter Achse in gleichartige Formschlußelemente (6) eingreifen, welche an den Führungen angeordnet sind.

Bei gelöster Achsenbefestigung in der Führung lassen sich die Formschlußelemente (2–6) aus dem gegenseitigen Eingriff bringen. Zum Spannen der Kette kann die Achse (9) in der Führung verschoben werden und danach greifen die Formschlußelemente (2) der nunmehr versetzten Plattensegmente (1) wieder in die Formschlußelemente (6) der Führungen formschlüssig ein.

Herr Hermann Hunfeld, Berßener Str. 25, 4475 Sögel

Vorrichtung zum Justieren der Achsen endlos umlaufender
Ketten, Gurte, Bänder, Riemen oder dergleichen

Die Erfindung betrifft eine Vorrichtung zum Justieren der
Achsen endlos umlaufender Ketten, Gurte, Bänder, Riemen
oder dergleichen, die zwecks Spannen vermittels Veränderung des Achsabstands lösbar beziehungsweise verstellbar
in feststehenden Führungen gehalten sind, wie zum Beispiel
Fahrradachsen.

Allgemeine Voraussetzung für die Montage von beispielsweise Kettentrieben ist in jedem Falle, daß die Achsen- und
Kettenräder achsenparallel und schlagfrei laufen und die
Ketten einwandfrei aber nicht zu straff gespannt sind. Es
ist bekannt, die Achsen in sogenannten Schlittenführungen
zu lagern, die zur Justierung und Verstellung des Achsabstandes gegenüber feststehenden Tragelementen verstellt
werden können. Diese Verstellung erfolgt durch Anschlag-
oder Justierschrauben, mit denen die die Achsenden aufnehmenden Schlitten bewegt und eingestellt werden können.
Da jedem Achsende eine eigene Anschlag- beziehungsweise
Justierschraube zugeordnet ist, bedeutet die einwandfreie
Ausrichtung und Spannung einer Kette einen erheblichen
Montageaufwand, wobei die zu erreichende Genauigkeit der
Achsenparallelität von der Geschicklichkeit des jeweiligen Monteurs abhängt.

Beispielsweise das Hinterrad von Fahrrädern wird mit den

- 2 -

0036518

Achsenden in als feststehende Führung dienende Schlitze einer Gabel eingesetzt, wobei an jedes Achsende ein Kettenspanner angesetzt wird, der als auf das Achsende steckbare Scheibe ausgebildet ist, von der radial ein Gewindebolzen absteht. Der Gewindebolzen ist durch ein den Führungen zugeordnetes festes Widerlager geführt, so daß die Achse mit Hilfe einer Mutter im Schlitz der feststehenden Führung nach hinten gezogen werden kann, um Achsparallelität einzujustieren und um die Kette zu spannen.

Der Erfindung liegt die Aufgabe zugrunde, das Justieren und Spannen von endlos umlaufenden Kraftübertragungselementen der eingangs genannten Art zu vereinfachen.

Diese Aufgabe ist erfindungsgemäß gelöst worden, durch auf die Achsenden steckbare Plattensegmente, die bei befestigter Achse formschlüssig in Formschlußelementen der Führungen eingreifen, welche in der Spann- und Justierrichtung hintereinander angeordnet sind.

Da einander gegenüberliegende Führungen zur Aufnahme je eines Achsendes die Formschlußelemente in zueinander korrespondierender Lage aufweisen, kann der Montagevorgang der achsparallelen Justierung entfallen. Ein auf jedes Achsende aufgestecktes Plattensegment greift erfindungsgemäß formschlüssig in das einer gewünschten Kettenspannung entsprechend ausgewählte Formschlußelement der Führungen ein, wonach die Achse lediglich mit der Führung noch zu befestigen ist. Justierarbeiten bei der Montage können somit entfallen, wodurch der Montagevorgang auf das Einsetzen und Befestigen der Achsenden in vorteilhafter Weise beschränkt ist.

Bei einer bevorzugten Ausführungsform ist vorgesehen, daß jedes Plattensegment im wesentlichen rechteckförmig ist und an den Längsseiten mit Formschlußelementen ausgerüstet ist.

Daraus ergibt sich der Vorteil, daß mehrere Formschlußelemente bei befestigter Achse gleichzeitig in Eingriff stehen. Bei einer schlitzförmigen Führung, wie sie beispielsweise bei Fahrrädern üblich ist, ist damit auch ein gegenseitiger Eingriff der Formschlußelemente zwischen Plattensegment und den Formschlußelementen an den Flanken des Schlitzes der Führung an beiden Seiten gegeben.

Da der Spannbereich durch die Länge eines mit Formschlußelementen versehenen Abschnitts der Führungen vorgegeben ist, kann zur Erweiterung des Spannbereiches jedes Plattensegment mit mindestens zwei nebeneinander angeordneten Aufsteckbohrungen für die Achsenden versehen werden. Dadurch kann gewährleistet werden, daß alle Formschlußelemente zwischen Führungen und Plattensegment in Eingriff stehen, indem zur Aufnahme der Achsenden die geeignete Aufsteckbohrung im Plattensegment gewählt wird.

Vorzugsweise sind mehrere in einem vorbestimmten Rastermaß zueinander angeordnete Formschlußelemente an den Führungen und Plattensegmenten vorgesehen. Die Anordnung der Formschlußelemente in vorbestimmtem Rastermaß bietet neben der Montageerleichterung den Vorteil, daß je nach Anwendungsfall gröbere oder feinere Spannschritte in Abhängigkeit vom Rastermaß gewählt werden können. Mit einem feinen Rastermaß sind somit sehr kleine Spannschritte möglich, wie sie beispielsweise bei Kettentrieben erforderlich sind, während mit einem gröberen Rastermaß auch größere Spannschritte, zum Beispiel bei elastischen Riementrieben durchgeführt werden können.

Bei einer bevorzugten Ausführungsform sind als Formschlußelemente ineinander greifende Verzahnungen, insbesondere eine sogenannte Sägezahnform-Verzahnung vorgesehen. Die Sägezahnformschlußelemente eignen sich besonders für einen

- 4 -

0036518

Einsatz als Kettenspanner bei Fahrrädern, weil die Kettenzugkraft optimal aufgefangen werden kann und somit die Verschraubung zur Festlegung der Achsen in den Führungen entlastet wird. Es ist jedoch ebenso möglich, andersartige Formschlußelemente einzusetzen, beispielsweise wellenförmige Verzahnungen oder dergleichen.

Obwohl die Führungen von vornherein mit eingeformten Formschlußelementen hergestellt werden können, ist es besonders bei Fahrrädern vorteilhaft, die Formschlußelemente durch angesetzte Zahnleisten auszubilden. An einer Kante mit der Verzahnung versehene Leisten können beispielsweise außen auf die Gabel neben die Schlitze zur Führung der Achsenden geschweißt, geschraubt, genietet oder gelötet werden. Eine solche Ansetzmöglichkeit der Zahnleisten hat den Vorteil, daß auch noch nachträglich Achslagerungen mit der erfindungsgemäßen Spanneinrichtung ausgerüstet werden können. Beispielsweise kann ohne weiteres jedes Fahrrad mit den Zahnleisten und Plattensegmenten ausgerüstet werden, indem die Zahnleisten angeschraubt oder angenietet werden.

Es ist auch ein besonderer Vorteil, daß Zahnleisten und Plattensegmente in einfachster Weise durch Stanzen hergestellt werden können und somit kostengünstig auf den Markt zu bringen sind.

Ausführungsbeispiele der Erfindung, aus denen sich weitere erfinderische Merkmale ergeben, sind in der Zeichnung dargestellt. Es zeigen:

Fig. 1 eine schematische Seitenansicht eines auf ein Achsende steckbaren Plattensegments und einer Zahnleiste,

Fig. 2 die Seitenansicht einer Hinterradlagerung eines Fahrrads, bei der die Achse mittels Zahnleiste und

- 5 -

0036518

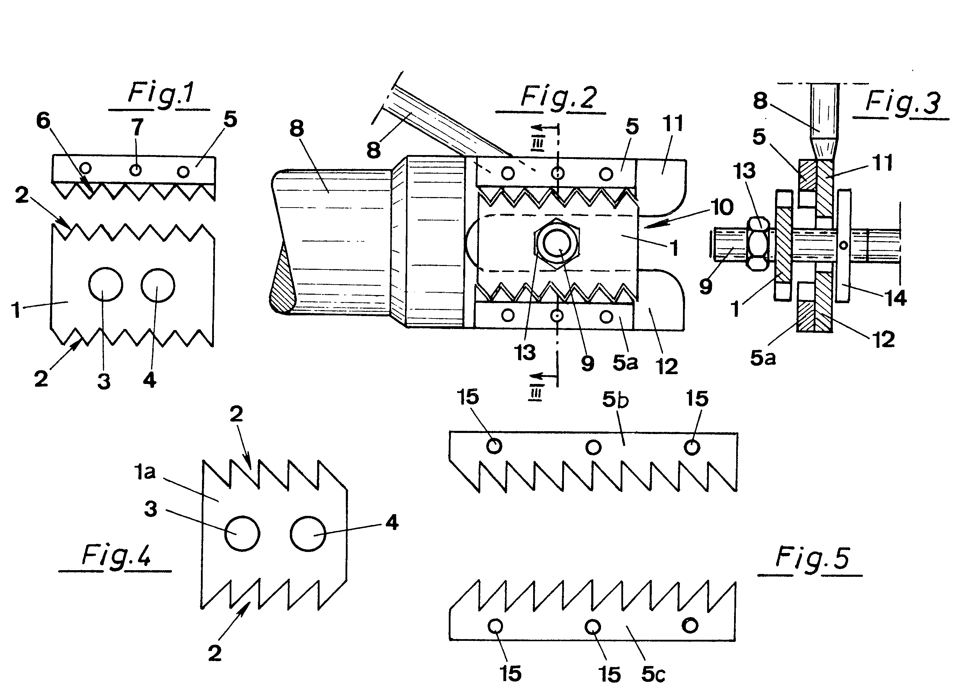

Plattensegment gemäß Fig. 1 justiert ist,

Fig. 3 einen Schnitt entlang der Linie III-III in Fig. 2,

Fig. 4 eine Seitenansicht eines Plattensegments mit einer
anderen Verzahnung,

Fig. 5 zwei dazugehörige Zahnleisten,

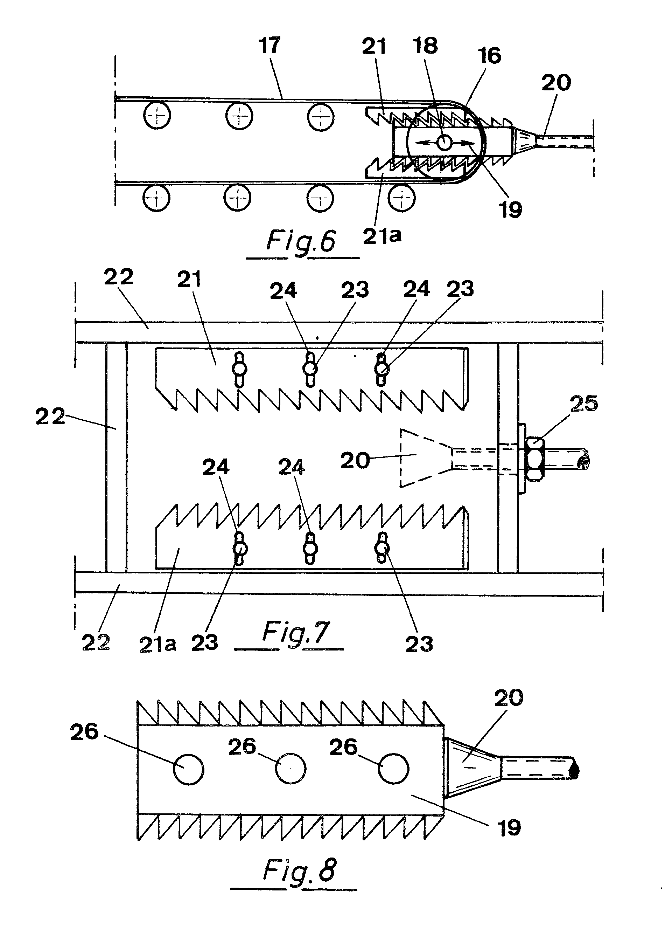

Fig. 6 eine schematische Seitenansicht eines Förderbandes,
dessen Umlenkrolle durch die erfindungsgemäße Vorrichtung gespannt und justiert ist,

Fig. 7 eine vergrößerte Seitenansicht des in Fig. 6 dargestellten Lagerbereichs der Umlenkrolle für das
Förderband und

Fig. 8 eine vergrößerte Seitenansicht des ein Achsende
der Umlenkrolle des in Fig. 6 dargestellten Förderbands tragenden Plattensegments.

In Fig. 1 ist ein Plattensegment 1 dargestellt, das als
rechteckförmiges Blechstanzteil ausgebildet ist, welches
an den Längsseiten mit Formschlußelementen versehen ist,
die bei diesem Ausführungsbeispiel als Verzahnung 2 ausgebildet sind. Mit 3 und 4 sind nebeneinanderliegende
Bohrungen bezeichnet. Mit jeweils einer der Bohrungen
kann das Plattensegment auf ein Achsende der zu führenden Achse aufgesteckt werden.

Mit 5 ist eine Zahnleiste bezeichnet, die an einer Längsseite ebenfalls als Verzahnung 6 ausgebildete Formschlußelemente aufweist. Die Zahnleiste kann an festen Rahmenteilen des die Achse führenden Maschinenteils beispielsweise durch Punktschweißen befestigt werden. Entsprechende Punktstellen sind mit 7 bezeichnet.

In Fig. 2 ist der Anwendungsfall von in Fig. 1 dargestellten Bauteilen bei der Hinterradlagerung eines Fahrrads in
der Seitenansicht dargestellt. Bei einem Fahrrad wird das
Hinterrad zwischen zwei parallelen gabelartigen Rahmenholmen geführt. In Fig. 2 ist ein Ende eines der Rahmenholme 8 dargestellt. Zur Führung der Achse 9 des Hinterrads ist das freie Ende des Rahmenholms mit einem Schlitz 10 zwischen zwei Flanken 11 und 12 versehen. An jede der Flanken ist eine Zahnleiste 5 und 5a angepunktet, deren Verzahnungen einander zugekehrt sind. Der Abstand der Zahnleisten 5 und 5a voneinander ist so bemessen, daß die Verzahnungen 2 des auf die Achse 9 gesteckten Plattensegments 1 mit den Verzahnungen der Zahnleisten 5 und 5a formschlüssig ineinandergreifen, sobald die auf das Ende der Achse 9 gesetzte Mutter 13 angezogen wird.

In Fig. 3 ist ein Schnitt entlang der Linie III-III in Fig. 2 dargestellt. Gleiche Bauteile sind mit gleichen Bezugszahlen versehen. Aus dieser Darstellung ist ersichtlich, wie das Plattensegment 1 bei Anziehen der Mutter 13 mit den Zahnleisten 5 und 5a in Wirkverbindung kommt. Mit 14 ist eine übliche Vorlegscheibe bezeichnet.

In Fig. 4 ist ein Plattensegment 1a dargestellt, dessen Verzahnung eine sogenannte Sägezahnform hat.

In Fig. 5 sind zwei zum Plattensegment 1a gemäß Fig. 4 passende Zahnleisten 5b und 5c dargestellt. Diese Zahnleisten sind mit Bohrungen 15 versehen, mittels der eine Befestigung der Zahnleisten an entsprechenden Rahmenteilen der Achsenführung durch Schrauben erfolgen kann. Selbstverständlich können die Zahnleisten 5b und 5c auch durch Punktschweißen befestigt werden, wie es bei der in Fig. 1 bis Fig. 3 beschriebenen Zahnleiste 5 und 5a der Fall ist.

Fig. 6 zeigt einen anderen Anwendungsfall, bei dem Plattensegmente und Zahnleisten zum Justieren und Spannen der Umlenkrolle 16 eines Förderbandes 17 verwendet werden. Das auf die Achse 18 der Umlenkrolle 16 steckbare Plattensegment 19 ist zum Spannen des Förderbands 17 mit einer Justierschraube 20 in Pfeilrichtung bewegbar und einstellbar, solange die Formschlußelemente beziehungsweise die Verzahnung des Plattensegments 19 nicht mit den Verzahnungen zugeordneter Zahnleisten 21 und 21a in Wirkverbindung stehen.

In Fig. 7 ist eine schematische Seitenansicht des Umlenkbereichs des in Fig. 6 dargestellten Förderbands in vergrößertem Maßstab dargestellt. Die Umlenkrolle und das auf seine Achse steckbare Plattensegment sind nicht weiter dargestellt; lediglich die am Plattensegment angelenkte Stellschraube 20 ist durch gestrichelte Linien angedeutet.

Mit Rahmenteilen 22 des Förderbands sind die Zahnleisten 21 und 21a mit Schrauben 23 lösbar verbunden. Die Zahnleisten weisen quer ausgerichtete Langlöcher 24 auf, mit denen sie an den Schrauben 23 geführt werden. Sobald die Schrauben 23 gelöst sind, können die Zahnleisten demzufolge soweit nach außen geschoben werden, bis ihre Verzahnung nicht mehr mit den Verzahnungen des Plattensegments in Eingriff steht. Das Plattensegment kann dann zum Spannen des Förderbands mittels der Stellschraube 20 und der zugeordneten Stellmutter 25 bewegt werden. Danach werden die Zahnleisten wieder soweit gegeneinander geschoben, daß sie formschlüssig in die Zähne des Plattensegments eingreifen, wodurch die genaue achsparallele Führung eingestellt ist.

Zur Vereinfachung dieser achsparallelen Einstellung können alle Zahnleisten mit entsprechenden Markierungen versehen sein. Bei diesem Ausführungsbeispiel sind die Markierungen durch eingeprägte Zahlen ersetzt, so daß jedem Zahn der Verzahnung eine entsprechende Zahl als Kennung zugeordnet ist. Selbstverständlich können als Kennung auch Farbmarkierungen verwendet werden. Die Anbringung von Kennungen

0036518

ist natürlich auch bei dem Anwendungsfall der Hinterradlagerung eines Fahrrades möglich.

In Fig. 8 ist eine Seitenansicht eines Plattensegments 19
dargestellt, welches für verschiedene Achsaufnahmen mit
drei nebeneinanderliegenden Bohrungen 26 versehen ist und
an einem Ende die Spannschraube 20 aufweist.

Die in Fig. 7 und Fig. 8 dargestellten Formschlußelemente
sind wiederum als Sägezahnverzahnungen ausgebildet, durch
welche bei einmal eingestellter Achsparallelität die durch
die Spannschraube 20 zunächst erzeugte Spannkraft für das
Förderband aufgefangen wird, so daß die Spannschraube letztlich entlastet ist.

- 1 -

0036518

Patentansprüche:

1. Vorrichtung zum Justieren der Achsen endlos umlaufender Ketten, Gurte, Bänder, Riemen oder dergleichen, die zwecks Spannen vermittels Veränderung des Achsabstands lösbar bzw. verstellbar in feststehenden Führungen gehalten sind, gekennzeichnet durch auf die Achsenden steckbare Plattensegmente (1,1a,19), die bei befestigter Achse (9,18) formschlüssig in Formschlußelemente (6) der Führungen eingreifen, welche in der Spann- und Justierrichtung hintereinander angeordnet sind.

2. Vorrichtung nach Anspruch 1, dadurch gekennzeichnet, daß jedes Plattensegment (1,1a,19) im wesentlichen rechteckförmig ist und an den Längsseiten die Formschlußelemente hat.

3. Vorrichtung nach einem der Ansprüche 1 und 2, dadurch gekennzeichnet, daß jedes Plattensegment (1,1a,19) mindestens zwei nebeneinander angeordnete Aufsteckbohrungen (3,4,26) für die Achsenden aufweist.

4. Vorrichtung nach einem der vorhergehenden Ansprüche, dadurch gekennzeichnet, daß mehrere in einem vorbestimmten Rastermaß zueinander angeordnete Formschlußelemente an den Führungen und Plattensegmenten (1,1a,19) vorgesehen sind.

5. Vorrichtung nach Anspruch 4, dadurch gekennzeichnet, daß als Formschlußelemente ineinander greifende Verzahnungen (2,6) vorgesehen sind.

6. Vorrichtung nach Anspruch 5, dadurch gekennzeichnet, daß die Verzahnungen (2,6) eine sogenannte Sägezahnform aufweisen.

0036518

7. Vorrichtung nach einem der vorhergehenden Ansprüche, da
   durch gekennzeichnet, daß die Formschlußelemente der Führungen als ansetzbare Zahnleisten (5,5a,5b,5c,21,21a) ausgebildet sind.

8. Vorrichtung nach einem der vorhergehenden Ansprüche, gekennzeichnet durch die Verwendung als Kettenspanner bei
   Fahrrädern.

DE 36518

Fig.1

Fig.2

Fig.3

Fig.4

Fig.5

8018

Fig.6

Fig.7

Fig.8

8018

Europäisches
Patentamt

**EUROPÄISCHER RECHERCHENBERICHT**

0036518
Nummer der Anmeldung

EP 81 10 1532

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 567 329 (DEPAS)<br>* ganzes Dokument *<br><br>-- | 1,5,7,8 |
| X | GB - A - 597 356 (RUNWELL)<br>* ganzes Dokument *<br><br>-- | 1,2,3,5,8 |
| X | FR - A - 552 257 (DEPAS)<br>* ganzes Dokument *<br><br>-- | 1,5,6,8 |
|  | BE - A - 837 437 (MILHOUX)<br>* ganzes Dokument *<br><br>-- | 1 |
|  | FR - E - 29 324/FR - A - 582 017 (DEPAS)<br>* ganzes Dokument *<br><br>-- | 1 |
|  | FR - A - 582 017 (DEPAS)<br>* ganzes Dokument *<br><br>----- | 1 |

**KLASSIFIKATION DER ANMELDUNG (Int. Cl.)**

B 62 M 9/16

**RECHERCHIERTE SACHGEBIETE (Int. Cl.)**

B 62 M
B 62 K

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17.06.1981 | SCHMITTER |

EPA form 1503.1  06.78